# FASCICULE DE BREVET EUROPEEN

(11) **EP 2 665 120 B1**
(45) Date de publication et mention de la délivrance du brevet: **03.08.2016**
(21) Numéro de dépôt: 13165217.4
(22) Date de dépôt: 24.04.2013
(51) Int. Cl.: H01M 10/42, B60L 11/18, H02J 7/00, B60L 3/00, H01M 10/0525, H01M 10/0565, H01M 10/052

(54) **Procédé et système d'équilibrage de cellules constitutives d'une batterie**
Verfahren und System zum Ausgleich von Zellen, die Bestandteil einer Batterie sind
Method and system for balancing the cells that make up a battery

(30) Priorité: 14.05.2012 CH 6752012
(43) Date de publication de la demande: 20.11.2013
(73) Titulaire: Micro-Beam SA, 1400 Yverdon-les-Bains (CH)
(72) Inventeur: Bieler, Thierry, 1112 Echichens (CH); Cardoletti, Laurent, 1844 Villeneuve (CH); Fleury, Christian, 1585 Cotterd (CH); Koechli, Christian, 1462 Yvonnand (CH); Tinguely, Simon, 1007 Lausanne (CH)
(74) Mandataire: P&TS SA (AG, Ltd.)

(56) Documents cités:
- EP-A2- 2 043 222
- WO-A1-2004/073001
- US-A1- 2006 022 646
- US-A1- 2008 309 286
- US-A1- 2010 033 128

## Description

### Domaine technique

La présente invention concerne un procédé et un système d'équilibrage de n cellules constitutives d'une batterie lithium-ion ou lithium-polymère.

### Etat de la technique

Les batteries lithium-ion ou lithium-polymère sont de plus en plus utilisées pour alimenter des modules électroniques de contrôle d'un ou plusieurs moteurs avec une source de tension continue, pour des applications très différentes, par exemple des vélos électriques, des scooters électriques, des outils électroportatifs tels que des sécateurs électroportatifs, etc.

Une batterie lithium-ion ou lithium-polymère est généralement constituée par n cellules en série, avec n ≥ 2.

L'équilibrage de ces cellules est important pour garantir une exploitation optimale de la batterie. Différentes solutions existent pour réaliser cet équilibrage.

Le document EP1854165 décrit un procédé d'équilibrage qui démarre à partir d'un instant t1 postérieur au début de l'opération de chargement de la batterie et jusqu'à la fin normale ou à l'interruption anticipé de ce chargement. La charge se réalise en connectant la batterie à un chargeur qui est une source d'alimentation électrique dont la tension et le courant sont adaptés à la charge d'une batterie lithium ion ou lithium polymère.

Pendent cette période les niveaux de charges des cellules sont surveillés et, en fonction de ces niveaux, les cellules sont soit alimentées de façon uniforme ou bien de manière différenciée selon ces niveaux. En particulier après l'instant t1 et au long de l'opération de charge de la batterie, la cellule la moins chargée est détectée en mesurant la tension aux bornes de chaque cellule de la batterie. Chaque cellule qui a une surcharge supérieure à une valeur de seuil par rapport à la cellule la moins chargée est alors connectée individuellement à une résistance d'équilibrage en parallèle afin de réduire d'environ 10% le courant de charge pour chacune des cellules concernées pendent une durée prédéterminée.

Une solution similaire est décrite dans FR2862813, qui décrit le même procédé d'équilibrage, mais démarrant à partir d'un instant t0 correspondant au début de l'opération de chargement de la batterie et se déroulant tout au long de ce chargement.

La connexion de chaque cellule à un circuit de dérivation du courant comprenant une résistance d'équilibrage en parallèle à chaque cellule afin d'aboutir à une diminution du courant de charge n'est pas efficace lors du chargement de la batterie car du courant est gaspillé pendant la période de charge de la batterie. En outre ce procédé prolonge la période de charge de la batterie. Enfin le courant de charge peut influencer les mesures de tensions aux bornes des cellules.

Il est connu aussi de réaliser l'équilibrage des cellules en fin de charge : la charge des cellules est interrompue au fur et à mesure qu'elles ont été chargées à 100%. Il est possible donc d'obtenir une charge à 100% de toutes les cellules en fin de l'opération de charge. Cependant cette technique présente d'autres inconvénients liés à une élévation de la température et donc à une surchauffe qui peut aussi aboutir à une explosion. En outre l'application de courants de charge de forte intensité requis dans ce cas accélère le vieillissement de la batterie.

US20060022646 concerne un procède et un appareil pour chauffer des batteries au lithium qui se trouvent à une basse température, au moyen d'un capteur de température configuré pour générer un signal de température qui indique une température des cellules d'une batterie au
lithium. Ce document décrit l'utilisation d'un circuit d'équilibrage pour chauffer des cellules d'une batterie au lithium qui se trouvent à une basse température. Le procédé d'équilibrage du circuit d'équilibrage utilise un courant d'équilibrage pour une cellule ayant une tension nominale de 3.65 V de 90 mA. Dans une variante cet équilibrage est démarré quand une tension de fin de charge est détectée.

US20080309286 concerne un chargeur permettant l'équilibrage des cellules d'une batterie lithium-ion pendant la charge de la batterie.

EP2043222 concerne un système d'alimentation électrique d'un véhicule.

US20100033128 concerne un circuit d'équilibrage d'une batterie au lithium-ion, dans lequel un « sink current » de 3 mA est créé lorsqu'une cellule non-équilibré a été détectée. Ce courant permet d'enclencher un interrupteur de façon à ce qu'un courant de dérivation puisse passer dans le circuit ainsi fermé, en équilibrant la cellule. Ce courant de 3 mA est la valeur du « sink current », et non pas celui du courant de dérivation.

WO2004073001 concerne un ensemble de résistances d'équilibrage destiné à un dispositif de stockage d'énergie sous forme de super-condensateurs. Le courant d'équilibrage est défini comme le courant permettant d'équilibrer les deux super-condensateurs. Ce courant d'équilibrage peut avoir une valeur de 3 à 4 mA. Il ne s'agit cependant pas d'un courant d'équilibrage de cellules de la batterie au lithium qui est reliée à ces super-condensateurs.

Il existe donc un besoin de résoudre au moins un des désavantages des solutions connues.

Il existe aussi un besoin de trouver une solution alternative aux solutions connues.

### Bref résumé de l'invention

Un but de la présente invention est de proposer un procédé et un système d'équilibrage de n cellules constitutives d'une batterie lithium-ion ou lithium-polymère exempt d'au moins une des limitations des procédés et systèmes connus.

Selon l'invention, ces buts sont atteints notamment au moyen d'un procédé d'équilibrage de n cellules selon la revendication 1, d'un système d'alimentation d'un moteur à courant continu selon la revendication 10, d'un module électronique pour la gestion de l'équilibrage des n cellules d'une batterie lithium-ion ou lithium-polymère selon la revendication 13 et au moyen de l'utilisation d'un premier module électronique en combinaison avec un deuxième module électronique afin d'équilibrer n cellules avec n ≥ 2, constitutives d'une batterie lithium-ion ou lithium-polymère selon la revendication 14.

L'expression « moteur à courant continu » peut indiquer un moteur à courant continu à collecteur, ce collecteur commutant mécaniquement l'alimentation des bobines rotoriques en fonction de la position du rotor, ainsi qu'un moteur à courant continu sans collecteur, c'est à-dire un moteur synchrone avec une électronique de puissance qui commute électroniquement l'alimentation de phases du moteur en fonction de la position du rotor. La position rotorique est dans ce cas obtenue par un capteur de position ou par le biais de technologies sensorless.

Le procédé d'équilibrage de n cellules, avec n ≥ 2, constitutives d'une batterie lithium-ion ou lithium-polymère, ces cellules étant en série, selon l'invention consiste à réaliser, si une fin de charge de la batterie a été détectée, la création aux bornes d'au moins une cellule d'un courant de fuite, de manière à réduire la différence de charge entre cellules.

Avantageusement, le procédé d'équilibrage implique la création aux bornes de toutes les cellules, sauf de la cellule la moins chargée, d'un courant de fuite.

On appelle courant de fuite dans la présente demande un courant très faible par rapport au courant de charge et au courant délivré par la batterie lors de son utilisation normale. Des courants de fuite involontaires existent en raison de l'impédance non infinie entre les bornes de chaque cellule de la batterie. Des courants de fuite volontaires peuvent aussi être créés, en connectant volontairement des résistances ou d'autres impédances de valeur importante entre les bornes d'une ou plusieurs cellules de la batterie, de manière à décharger lentement cette cellule.

L'équilibrage des cellules selon l'invention débute lorsqu'une fin de charge est détectée et il est exécuté pendant la décharge et/ou l'utilisation du système d'alimentation et/ou le stockage du système d'alimentation.

Dans une variante la fin de charge de la batterie est détectée quand le courant de charge est presque nul, c'est-à-dire inferieur à une valeur de seuil qui dans une variante est d'environ 400 mA.

Dans une autre variante la fin de charge de la batterie est détectée quand la tension aux bornes d'au moins une cellule est égale à une tension de seuil qui dans une variante est d'environ 4 V.

Le seuil de 4 V pour détecter la fin de charge peut être légèrement modifié par l'homme du métier et être par exemple et de façon non limitative égal à 3.9 V ou 4.1 V sans impact important sur l'équilibrage.

Le niveau de courant de charge faible, par exemple < 400 mA, pour détecter la fin de charge est choisi pour éviter que le courant de charge n'influence trop les mesures des tensions aux bornes des cellules.

Le courant de fuite permet aux cellules d'une batterie *en fin de charge -* et donc pour laquelle le procédé de chargement est sensiblement terminé - de « brûler » un peu d'énergie à chaque cellule.

Le procédé d'équilibrage selon l'invention est donc plus efficace que les procédés connus, dans lesquels l'équilibrage est réalisé *pendant la charge* de la batterie : en effet dans les solutions connues chaque cellule est déchargée pendant sa charge, ce qui bien évidemment implique un gaspillage d'énergie.

Dans la présente invention chaque cellule est déchargée *lentement* seulement une fois que le chargement de la batterie est terminé. En d'autres termes dans chaque cellule il n'y a pas de diminution de son courant de charge lors du procédé de chargement de la batterie, mais un courant de fuite seulement quand ce chargement a été terminé.

A la différence des solutions connues, donc pour une batterie déséquilibrée, les cellules de la batterie ne seront jamais toutes complètement chargées au même temps et avant l'utilisation de la batterie, car l'équilibrage des cellules est exécuté une fois le chargement de la cellule est terminé, par exemple lors de la décharge de la batterie quand elle est utilisée ou durant le stockage de la batterie.

Il est important de noter que le procédé d'équilibrage démarré en fin de charge selon l'invention est *lent.* Dans le contexte de l'invention l'adjectif « lent » en référence au procédé d'équilibrage indique que sa vitesse est d'au moins un ordre de grandeur supérieure à celle du procédé de chargement de la batterie. Par exemple une batterie d'une capacité de 2500 mAh se charge pendant un temps inférieur à 3 heures, de préférence inférieur à 2 heures; dans ce cas le procédé d'équilibrage dure au moins 40 heures, de préférence au moins 50 heures. Ce temps se calcule donc en heures, voir jours.

Les temps d'équilibrage longs sont liés à une valeur du courant de fuite particulièrement « faible », c'est-à-dire d'au moins deux ordres de grandeur inférieure au courant de charge. Dans l'exemple ci-dessus le courant de fuite s'élève à quelques mA, par exemple 2 mA et le courant de charge de la batterie est supérieur à 0,1 A, de préférence supérieur à 1 A.

Le procédé d'équilibrage selon l'invention est donc lent, doux et permet ainsi d'éviter la surchauffe des cellules et d'améliorer la durée de vie de la batterie.

Avantageusement le courant de fuite est le même pour toutes les cellules.

Dans une variante préférentielle le procédé selon l'invention comporte, quand une fin de charge a été détectée, la mesure et la mémorisation de la tension aux bornes de chaque cellule, la détermination de la différence de l'état de charge en mAh entre chaque cellule et la cellule la moins chargée, la déduction de cette différence pour chaque mesure de tension aux bornes de chaque cellule.

Avantageusement le courant de fuite est créé pendant un temps d'équilibrage qui permet de réduire d'un pourcentage fixé la différence de l'état de charge par rapport à la cellule la moins chargée.

Dans une variante préférentielle ce pourcentage est compris entre 40% et 70%. Dans une variante préférentielle il est égal à environ 50%.

Comme discuté la valeur du courant est égale pour toutes les cellules. Par contre le temps permettant de réduire d'un pourcentage fixé la différence de l'état de charge de chaque cellule par rapport à la cellule la moins chargée varie pour chaque cellule selon son niveau de charge. Ce temps est une fonction de la différence de l'état de charge de chaque cellule par rapport à la cellule la moins chargée, indépendamment de l'âge de la batterie.

Avantageusement l'algorithme d'équilibrage est exécuté à partir de la fin de charge pendant les temps d'équilibrage calculés indépendamment de l'utilisation de la batterie, par exemple lors de la décharge, par exemple quant la batterie est connectée à un power pack utilisé pour tailler, ou durant le stockage de la batterie chargée ou partiellement déchargée.

Il est possible donc que la batterie soit complètement déchargée avant la fin du procédé d'équilibrage selon l'invention. Dans ce cas, lors d'un nouveau chargement de la batterie, le procédé d'équilibrage des cellules en cours est interrompu. Dans d'autres variantes, il est possible de maintenir l'équilibrage aussi pendant la charge, le courant de fuite étant si petite qu'il n'influencera pratiquement pas la charge, et sachant que le temps de charge en comparaison des durées d'équilibrage est négligeable.

Avantageusement la réduction d'une fraction de la différence d'état de charge avec la cellule la moins chargée permet de tendre vers un état équilibré sans oscillation autour d'un état équilibré et ainsi éviter de cycler inutilement la batterie, ce qui prolonge la durée de vie de la batterie.

L'invention concerne aussi un système d'alimentation d'un moteur à courant continue, comprenant :
- au moins une batterie lithium-ion ou lithium-polymère, chaque batterie comprenant n cellules, avec n ≥ 2, les cellules étant en série
- pour chaque batterie, un dispositif de gestion de la batterie le dispositif de gestion comprenant :
- un premier module électronique agencé pour mesurer la tension aux bornes de chaque cellule lorsque la fin de charge de la batterie a été détectée
- un deuxième module électronique agencé pour gérer l'équilibrage des n cellules sur la base des tensions mesurées par le premier module électronique, cet équilibrage étant réalisé par la création aux bornes de toutes les cellules, sauf de la cellule la moins chargée, d'un courant de fuite.

Si la différence d'état de charge d'une cellule par rapport à la cellule la moins chargée est négligeable et/ou dans l'incertitude de mesure, le courant de fuite aux bornes des cellules sera appliqué pendant un temps nul.

Avantageusement le premier module électronique est un dispositif tel que le BP77PL900 commercialisé par Texas Instruments qui implémente de manière autonome une protection complète d'une batterie lithium ion ou lithium polymère pour la surtension, sous tension, sur courant à la décharge et les court-circuits à la décharge.

Dans une variante préférentielle ce module peut implémenter de manière autonome la gestion de l'équilibrage des cellules.

Cependant ce procédé d'équilibrage n'est pas efficace pour différentes raisons : il requiert plusieurs cycles pour équilibrer les cellules, la charge de la batterie est souvent interrompue et après recommencée, chaque cellule est chargée et déchargée plusieurs fois, ce qui réduit aussi la durée de vie de la batterie, le courant de charge influence les mesures de tensions aux bornes des cellules, etc.

Avantageusement cette gestion de l'équilibrage des cellules peut être désactivée et l'équilibrage des cellules peut être exécuté à l'aide d'un deuxième module électronique, qui dans une variante préférentielle est un microcontrôleur, par exemple un « host controller ». Un exemple de ce deuxième module est le dispositif MSP430 commercialisé par Texas Instruments.

Ce deuxième module électronique comprend un processeur qui désactive l'équilibrage des cellules du premier module électronique et gère cet équilibrage avec un nouveau procédé plus efficace. Ce procédé peut aussi être adapté aux différentes applications.

Avantageusement le système selon l'invention comprend un troisième module électronique agencé pour créer aux bornes de toutes les cellules, sauf de la cellule la moins chargée, un courant de fuite.

Dans une variante préférentielle ce courant est produit à l'aide du troisième module électronique pendant un temps d'équilibrage qui permet de réduire d'un pourcentage fixé la différence de l'état de charge de chaque cellule par rapport à la cellule la moins chargée.

Le troisième module comprend par exemple un nombre de circuits ≥ n, chaque circuit étant associé en parallèle à chaque cellule de la batterie. Chaque circuit comprend un interrupteur, réalisé par exemple à l'aide d'un transistor ou tout autre élément équivalent, et un élément de dissipation d'énergie, par exemple une résistance.

Dans une variante préférentielle le premier module électronique comprend ce troisième module électronique. Par exemple le dispositif BP77PL900 de Texas Instruments comprend un tel troisième module électronique. Il est possible donc d'exploiter ses au moins n circuits de dissipation pour le courant de fuite mentionné. Avantageusement ses circuits de dissipation permettent la création d'un courant de fuite faible, c'est-à-dire d'au moins deux ordres de grandeur inférieure au courant de charge, par exemple de quelques mA, par exemple 2 mA.

Dans une autre variante le premier et le deuxième module électronique sont intégrés dans un seul module et constituent un seul dispositif électronique.

L'invention concerne aussi l'utilisation du premier module électronique, par exemple le dispositif BP77PL900 de Texas Instruments, en combinaison avec le deuxième module électronique, par exemple le dispositif MSP430 de Texas Instruments afin d'équilibrer n cellules, avec n ≥ 2, constitutives d'une batterie lithium-ion ou lithium-polymère, ces cellules étant en série, en créant aux bornes de toutes les cellules, sauf de la cellule la moins chargée, un courant de fuite lorsqu'une fin de charge de la batterie a été détectée.

### Brève description des figures

Des exemples de mise en oeuvre de l'invention sont indiqués dans la description illustrée par les figures annexées dans lesquelles :
La figure 1 illustre un exemple d'un système d'alimentation d'une électronique de contrôle d'un moteur à courant continu selon l'invention, le système comprenant une batterie lithium-ion ou lithium-polymère, chaque batterie comprenant n cellules en série et pour chaque batterie un dispositif de gestion (BMS) de la batterie.
La figure 2 illustre un exemple d'alimentation d'une électronique de contrôle d'un moteur à courant continu avec un système d'alimentation selon l'invention.
La figure 3 illustre un exemple du premier module électronique.
La figure 4 illustre un exemple d'équilibrage des cellules d'une batterie tel qu'exécuté dans le dispositif BP77PL900 de Texas Instruments.
La figure 5 illustre un exemple du deuxième module électronique.
La figure 6 illustre un exemple de connexion des 10 cellules d'une batterie lithium-polymère.

### Exemple(s) de mode de réalisation de l'invention

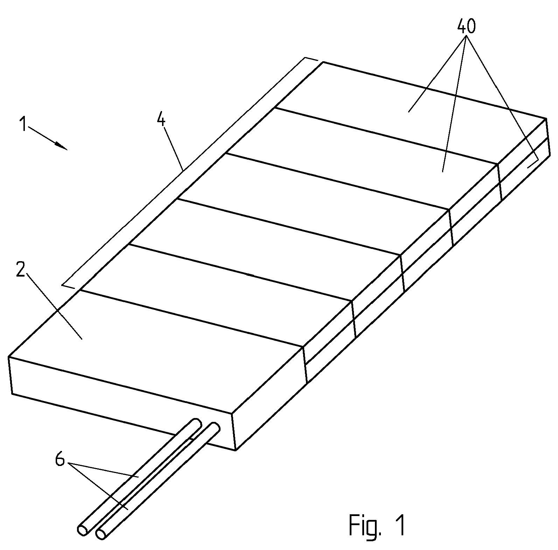

La figure 1 illustre un exemple d'un système 1 d'alimentation d'une électronique de contrôle d'un moteur à courant continue non illustré. Ce système comprend au moins une batterie lithium-ion ou lithium-polymère 4, chaque batterie 4 comprenant n cellules 40 en série et pour chaque batterie 4 un dispositif de gestion 2 de la batterie ou BMS (« Battery Management System »).

L'électronique de contrôle d'un moteur à courant continue peut être alimentée par une seule batterie ou par plusieurs batteries qui peuvent être connectée en série ou en parallèle, comme par exemple décrit dans EP2451044.

Sur la figure 1 le nombre de cellules 40 est égal à dix. Cependant un autre nombre n positif de cellules, avec n ≥ 2, peut être envisagé.

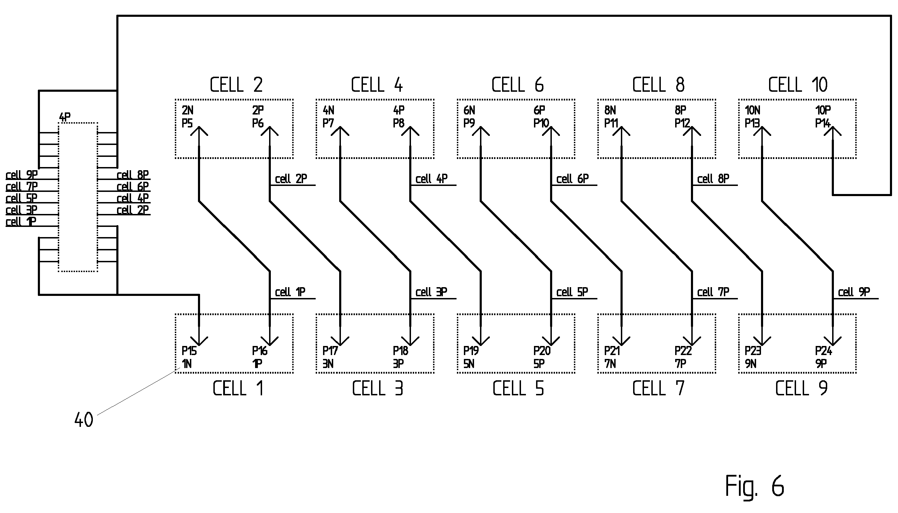

Ces cellules 40 sont en série, comme illustré sur la figure 6.

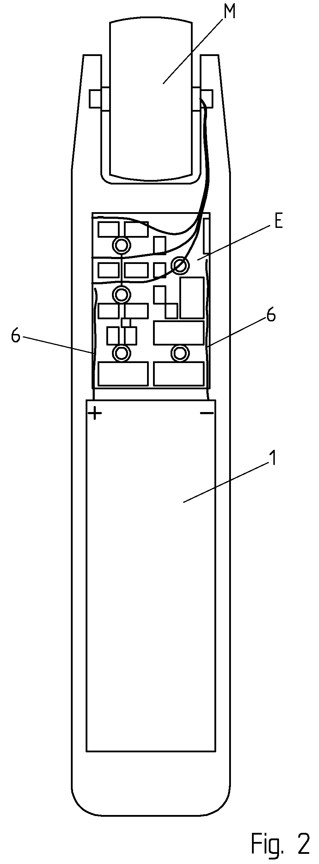

Les batteries lithium-ion ou lithium-polymère 4 sont en effet de plus en plus utilisées pour alimenter des modules électroniques de contrôle de un ou plusieurs moteurs avec une source de tension continue, pour des applications très différentes, par exemple des vélos électriques, des scooters électriques, des outils électroportatifs tels que des sécateurs électroportatifs, etc. Un exemple d'alimentation d'une électronique E de contrôle d'un moteur M à courant continu avec un système d'alimentation 1 selon l'invention est illustré sur la figure 2.

Dans les exemples des figures 1 et 2 deux câbles 6 relient le système d'alimentation 1 à l'électronique E de contrôle du moteur M ou à toute autre électronique.

Le procédé selon l'invention consiste à réaliser la création aux bornes de toutes les cellules 40, sauf de la cellule la moins chargée, d'un courant de fuite lorsqu'une fin de charge de la batterie 4 a été détectée.

Avantageusement l'équilibrage des cellules 40 selon l'invention débute lorsqu'une fin de charge est détectée et il est exécuté pendant la décharge et/ou l'utilisation du système d'alimentation 1 et/ou le stockage du système d'alimentation 1.

La fin de charge de la batterie 4 est détectée quand le courant de charge est presque nulle, c'est-à-dire inférieure à une valeur de seuil qui dans une variante est d'environ 400 mA.

Dans une autre variante la fin de charge de la batterie 4 est détectée quand la tension aux bornes d'au moins une cellule 40 est égale à une tension de seuil qui dans une variante est d'environ 4 V.

Le seuil de 4 V pour détecter la fin de charge peut être légèrement modifié par l'homme du métier et être par exemple et de façon non limitative égal à 3.9 V ou 4.1 V sans impact important sur l'équilibrage objet de l'invention.

Le niveau de courant de charge faible, par exemple < 400 mA, pour détecter la fin de charge est choisi pour éviter que le courant de charge n'influence trop les mesures de tensions aux bornes des cellules 40. Ce niveau est lié à la précision de la mesure du courant.

Le courant de fuite permet aux cellules 40 d'une batterie 4 en fin de charge de « brûler » un peu d'énergie à chaque cellule 40.

Comme discuté, le procédé d'équilibrage démarré en fin de charge selon l'invention est lent, c'est-à-dire que sa vitesse est d'au moins un ordre de grandeur supérieure à celle du procédé de chargement de la batterie. Ce procédé d'équilibrage dure au moins 40 heures, de préférence au moins 50 heures.

Les temps d'équilibrage longs sont liés à une valeur du courant de fuite particulièrement « faible », c'est-à-dire d'au moins deux ordres de grandeur inférieure au courant de charge, et également nettement inférieur au courant nominal fourni par la batterie lors de son utilisation normale. Dans l'exemple ci-dessus le courant de fuite s'élève à quelques mA, par exemple 2 mA et le courant de charge de la batterie est supérieur à 0,1 A, de préférence supérieur à 1 A.

Avantageusement le courant de fuite est le même pour toutes les cellules 40, ce qui permet d'utiliser des circuits de fuite très simples avec une seule résistance identique pour chaque cellule à décharger. Un courant variable en fonction de la différence de charge à compenser peut aussi être utilisé, mais complique le circuit de fuite de chaque cellule.

Dans une variante préférentielle le procédé selon l'invention, quand une fin de charge a été détectée, comporte :
- la mesure et la mémorisation de la tension aux bornes de chaque cellule 40,
- la détermination de la différence de l'état de charge en mAh entre chaque cellule 40 et la cellule la moins chargée,
- la déduction de cette différence pour chaque mesure de tension aux bornes de chaque cellule 40.

Ce dernier calcul fait intervenir la connaissance de la pleine capacité des cellules (par exemple 2500 mAh). Si les batteries vieillissent et que cette pleine capacité diminue, le calcul sera moins précis. Cette imprécision est compensée par le fait que seul un pourcentage de la différence d'état de charge est réduit lors d'un cycle d'équilibrage.

La tension aux bornes de chaque cellule 40 est mémorisée dans une mémoire qui peut appartenir au premier module électronique 10 et/ou au deuxième module électronique 20 et/ou être une mémoire externe.

Avantageusement le courant de fuite est créé pendant un temps d'équilibrage qui permet de réduire d'un pourcentage fixé la différence de l'état de charge par rapport à la cellule la moins chargée.

Dans une variante préférentielle ce pourcentage est compris entre 40% et 70%.Dans une variante préférentielle ce pourcentage est égal à environ 50%. L'invention ne vise donc pas à réaliser un équilibrage parfait des cellules, qui serait de toute façon difficile à réaliser au vu des difficultés à mesurer précisément les tensions de chaque cellule. Le dispositif de l'invention vise bien plutôt à réduire d'environ 40% à 70% les différences de charge, de manière à ce qu'elles ne soient pas préjudiciables. Ce compromis permet en outre d'éviter de décharger les cellules les plus chargées plus que ce qui est nécessaire pour un équilibrage suffisant, et donc d'éviter une altération de la capacité de la batterie en cyclant artificiellement la batterie par le seul fait de l'équilibrer. La batterie tend progressivement vers un état équilibré. Si la différence d'état de charge d'une cellule par rapport à la cellule la moins chargée est négligeable et/ou dans l'incertitude de mesure, le courant de fuite aux bornes de ladite cellule sera appliqué pendant un temps nul.

Comme discuté la valeur du courant de fuite est de préférence égale pour toutes les cellules 40. Par contre le temps permettant de réduire d'un pourcentage fixé la différence de l'état de charge de chaque cellule 40 par rapport à la cellule la moins chargée varie pour chaque cellule 40 selon son niveau de charge. Ce temps est une fonction de la différence de l'état de charge de chaque cellule 40 par rapport à la cellule la moins chargée, indépendamment de l'âge de la batterie.

Avantageusement l'algorithme d'équilibrage est exécuté à partir de la fin de charge pendant les temps d'équilibrage calculés indépendamment de l'utilisation de la batterie 4.

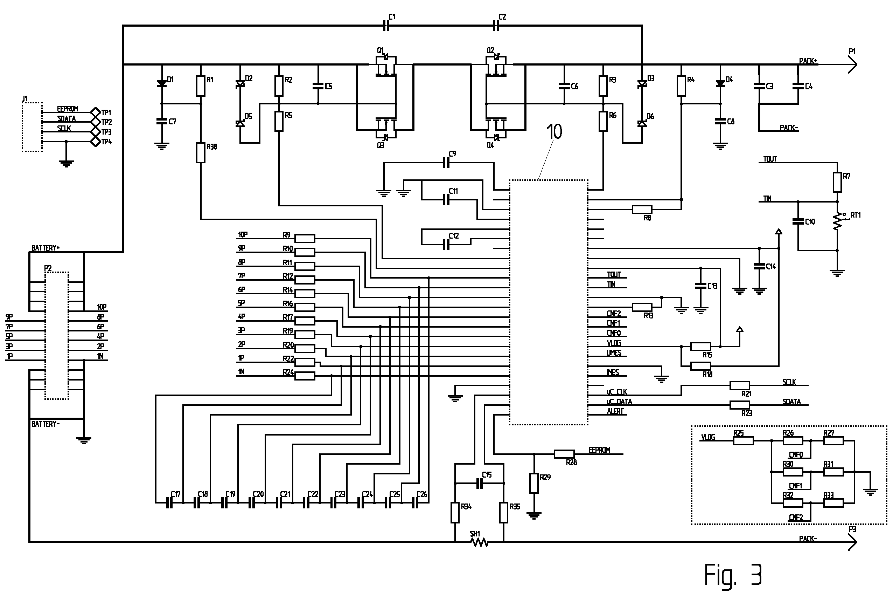

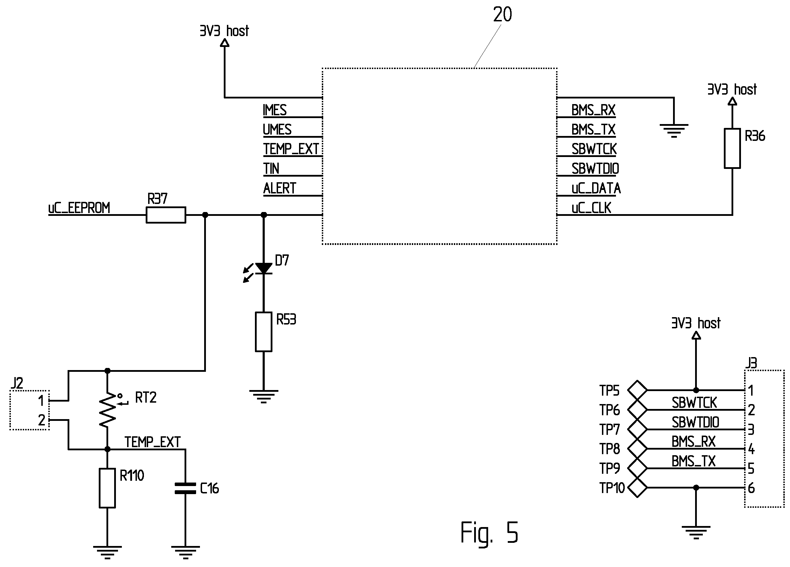

Avantageusement le dispositif de gestion de la batterie 4 du système 1 d'alimentation d'une électronique de contrôle d'un moteur selon l'invention comprend :
- un premier module électronique 10, visible sur la figure 3, agencé pour mesurer la tension aux bornes de chaque cellule 40 lorsque la fin de charge de la batterie 4 a été détectée
- un deuxième module électronique 20, visible sur la figure 5, agencé pour gérer l'équilibrage des n cellules 40 sur la base des tensions mesurées par le premier module électronique 10, cet équilibrage étant réalisé par la création aux bornes de toutes les cellules 40, sauf de la cellule la moins chargée, d'un courant de fuite.

Dans une variante préférentielle la décision de commencer le procédé d'équilibrage est prise par le deuxième module électronique 20.

Dans une variante préférentielle ce deuxième module électronique 20 commande au premier module électronique 10 de vérifier si le procédé de chargement est terminé. Dans une autre variante le deuxième module électronique 20 fait directement cette vérification.

Avantageusement le premier module électronique 10 est un dispositif tel que le BP77PL900 commercialisé par Texas Instruments qui implémente de manière autonome une protection complète d'une batterie lithium ion ou lithium polymère pour la surtension, sous tension, sur courant à la décharge et les court-circuits à la décharge.

Dans une variante préférentielle ce module peut implémenter de manière autonome la gestion de l'équilibrage des cellules.

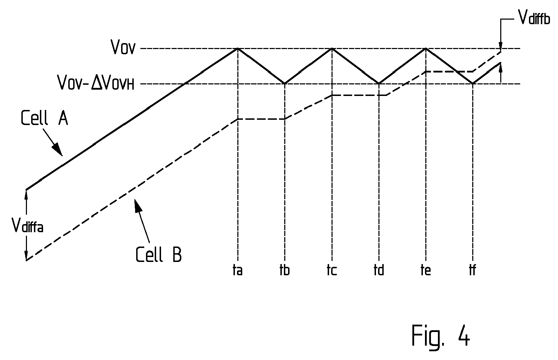

Comme illustré sur la figure 4, dans le dispositif BP77PL900, la charge de toutes les cellules est arrêtée lorsqu'une cellule, par exemple la cellule A, a une tension égale à une première tension de seuil Vₒᵥ (« Cell overvoltage »). La tension de la cellule A est alors réduite grâce à la création d'un courant de décharge (« bypass current ») à l'aide d'un troisième module non illustré et intégré dans le dispositif BP77PL900. Quand la tension de la cellule A est égale à une deuxième tension de seuil V_{OV} - ΔV_{OVH}, la charge de la batterie recommence. En d'autres termes pendant la décharge de la cellule A la charge des autres cellules, par exemple de la cellule B de la figure 4 est interrompue.

Une fois la charge recommencée, la tension de toutes les cellules, y compris la cellule A, augmente. Quand la tension de la cellule A est encore égale à la première tension de seuil Vₒᵥ la charge de la batterie est à nouveau interrompue et le procédé décrit répété. Après plusieurs cycles la différence de tension V_{diffb} entre les cellules est de plus en plus réduite.

Ce procédé d'équilibrage n'est donc pas efficace pour différentes raisons : il requiert plusieurs cycles pour équilibrer les cellules, la charge de la batterie est souvent interrompue et après recommence, chaque cellule, par exemple la cellule A, est chargée et déchargée plusieurs fois, ce qui réduit aussi la durée de vie de la batterie, le courant de charge influence les mesures de tensions aux bornes des cellules, etc.

Avantageusement cette gestion de l'équilibrage des cellules peut être désactivée et l'équilibrage des cellules 40 peut être exécuté à l'aide du deuxième module électronique 20, qui dans une variante préférentielle est un « host controller ». Un exemple de ce deuxième module est le dispositif MSP430 commercialisé par Texas Instruments, illustré sur la figure 5.

Ce deuxième module électronique 20 comprend un processeur qui désactive l'équilibrage des cellules 40 du premier module électronique 10 et gère cet équilibrage avec un nouveau procédé plus efficace. Ce procédé peut aussi être adapté aux différentes applications.

Avantageusement le système selon l'invention comprend un troisième module électronique non illustré agencé pour créer aux bornes de toutes les cellules 40, ou de toutes les cellules sauf la cellule la moins chargée, un courant de fuite. Ce troisième module électronique comprend donc des dérivateurs de courant.

Dans une variante préférentielle le courant de fuite est produit à l'aide du troisième module électronique pendant un temps d'équilibrage qui permet de réduire d'un pourcentage fixé la différence de l'état de charge de chaque cellule par rapport à la cellule la moins chargée.

Le troisième module comprend par exemple un nombre de circuits ≥ n, chaque circuit étant associé en parallèle à chaque cellule 40 de la batterie. Chaque circuit est un circuit de dérivation qui par exemple comprend un interrupteur, réalisé par exemple à l'aide d'un transistor ou tout autre élément équivalent, et un élément de dissipation d'énergie, par exemple une résistance.

Dans une variante préférentielle le premier module électronique 10 comprend ce troisième module électronique. Par exemple le dispositif BP77PL900 de Texas Instruments comprend un tel troisième module électronique. Il est possible donc d'exploiter ses au moins n circuits de dissipation pour le courant de fuite mentionné. Avantageusement ses circuits de dissipation permettent la création d'un courant de fuite faible, c'est-à-dire d'au moins deux ordres de grandeur inférieure au courant de charge, par exemple de quelques mA, par exemple 2 mA.

Dans une autre variante le premier 10 et le deuxième module 20 électronique sont intégrés dans un seul module et constituent un seul dispositif électronique.

La mesure de la tension aux bornes de chaque cellule lorsque la fin de charge de la batterie a été détectée peut être soit analogique et donc continue soit numérique et donc par mesures répétées.

En combinant le premier module électronique 10 avec le deuxième circuit électronique 20, il est possible donc de moduler la réaction à long terme du dispositif de gestion de la batterie 2 ou BMS (« Battery Management System ») lorsque qu'une protection s'enclenche, par exemple :
- Le premier module électronique 10 désactive la sortie de courant et tension continue si le courant de sortie de la batterie 4 dépasse la valeur de court-circuit.
   Il s'agit d'une sécurité et pas d'une limitation de courant. Le deuxième circuit électronique 20 peut par exemple activer la sortie de tension après un certain délai de temps, par exemple après 10 secondes.
- Le premier module électronique 10 désactive la sortie de courant et tension continue si le courant de sortie de la batterie 4 dépasse une certaine valeur pendant un certain temps.
   Encore une fois il s'agit d'une sécurité qui tolère des pics de courant seulement pour un temps déterminé ; il ne s'agit d'une limitation de courant. En effet le deuxième circuit électronique 20 peut activer la sortie de tension après un certain délai, par exemple après 10 secondes.

Dans une variante si le courant de sortie de la batterie 4 dépasse la valeur de court-circuit et/ou une certaine valeur pendant un certain temps, le deuxième module 20 peut décider de ne pas faire les mesures des tensions aux bornes des cellules.

La mesure du courant de charge et/ou décharge est effectué par le dérivateur du courant ou « shunt » SH1 visible en bas sur la figure 3.

Les transistors Q1 à Q4 en haut sur la figure 3 permettent d'enclencher le procédé de charge et/ou de décharge de la batterie 4.

Dans une variante le premier module 10 et/ou le deuxième module 20 surveillent la température et protègent donc la batterie lors de surchauffe des cellules.

## Revendications

1. Procédé d'équilibrage de n cellules (40), avec n ≥ 2, constitutives d'une batterie (4) lithium-ion ou lithium-polymère, lesdites cellules (40) étant en série, ce procédé consiste à réaliser, si une fin de charge de la batterie (4) a été détectée, la création aux bornes d'au moins une cellule (40) d'un courant de manière à réduire la différence de charge entre cellules, **caractérisé en ce que**
ledit courant est un courant de fuite qui est au moins deux ordres de grandeur inférieur au courant de charge, et **en ce que**
ledit procédé d'équilibrage comporte, quand une fin de charge a été détectée, la mémorisation de la tension aux bornes de chaque cellule (40) ledit procédé d'équilibrage est exécuté pendant la décharge de ladite batterie et/ou l'utilisation d'un système d'alimentation comprenant ladite batterie, et/ou le stockage dudit système d'alimentation.

2. Le procédé selon la revendication 1, la fin de charge de la batterie (4) étant détectée si la valeur du courant de charge de la batterie est inférieure à une valeur de seuil.

3. Le procédé selon l'une des revendications 1 ou 2, la fin de charge de la batterie (4) étant détectée si la valeur du courant de charge de la batterie est inférieure à 400 mA.

4. Le procédé selon l'un des revendications 1 à 3, la fin de charge de la batterie (4) étant détectée si au moins une cellule (40) a une tension à ses bornes égale à une tension de seuil.

5. Le procédé selon l'un des revendications 1 à 4, la fin de charge de la batterie (4) étant détectée si au moins une cellule (40) a une tension à ses bornes égale à 4 V.

6. Le procédé selon l'un des revendications 1 à 5, comprenant la mesure de la tension aux bornes de chaque cellule (40), la détermination de la différence de l'état de charge entre chaque cellule (40) et la cellule la moins chargée et la déduction de la différence de l'état de charge entre chaque cellule (40) et la cellule la moins chargée pour chaque mesure de tension aux bornes de chaque cellule.

7. Le procédé selon l'un des revendications 1 à 6, la création dudit courant de fuite étant pendant un temps d'équilibrage qui permet de réduire d'un pourcentage compris entre 40% et 70% la différence de l'état de charge par rapport à la cellule (40) la moins chargée.

8. Le procédé selon l'un des revendications 1 à 7, ladite courant de fuite étant le même pour chaque cellule (40).

9. Le procédé selon l'un des revendications 1 à 8, ledit courant de fuite étant de 2 mA.

10. Système d'alimentation (1) d'un moteur (M) à courant continu, comprenant
- au moins une batterie (4) lithium-ion ou lithium-polymère, chaque batterie comprenant n cellules (40), avec n ≥ 2, les cellules étant en série
- pour chaque batterie (4), un dispositif de gestion (2) de la batterie le dispositif de gestion (2) comprenant
- un premier module électronique (10) agencé pour mesurer la tension aux bornes de chaque cellule (40) lorsque la fin de charge de la batterie (4) a été détectée
- un deuxième module électronique (20) agencé pour gérer l'équilibrage des n cellules (40) sur la base des tensions aux bornes de chaque cellule (40) mesurées par le premier module électronique (10) quand une fin de charge a été détectée et mémorisées par une mémoire appartenant au premier module électronique (10) et/ou au deuxième module électronique (20) et/ou étant une mémoire externe, ledit équilibrage étant réalisé par la création aux bornes d'au moins une cellule (40) d'un courant de fuite qui est au moins deux ordres de grandeur inférieur au courant de charge de manière à réduire la différence de charge entre cellules ledit équilibrage étant exécuté pendant la décharge de ladite batterie et/ou l'utilisation dudit système d'alimentation, et/ou le stockage dudit système d'alimentation.

11. Le système selon la revendication 10, ledit deuxième module électronique (20) étant agencé pour calculer la différence de l'état de charge entre chaque cellule et la cellule la moins chargée et/ou déduire de cette différence pour chaque mesure de tension aux bornes de chaque cellule (40).

12. Le système selon l'une des revendications 10 ou 11, comprenant un troisième module électronique agencé pour créer aux bornes de toutes les cellules (40), sauf de la cellule la moins chargée, un courant de fuite pendant un temps d'équilibrage qui permet de réduire d'un pourcentage fixé ladite différence de l'état de charge par rapport à la cellule la moins chargée.

13. Module électronique (20) pour la gestion de l'équilibrage des n cellules d'une batterie (4) lithium-ion ou lithium-polymère, chaque batterie comprenant n cellules (40), avec n ≥ 2, les cellules étant en série ledit module électronique (20) comportant une mémoire, ladite mémoire mémorisant, quand une fin de charge a été détectée, la tension mesurée aux bornes de chaque cellule, ledit module électronique (20) étant agencé, lorsque la fin de charge de la batterie (4) a été détectée, pour gérer l'équilibrage des n cellules, ledit équilibrage étant réalisé par la création aux bornes d'au moins une cellule (40) d'un courant de fuite qui est au moins deux ordres de grandeur inférieur au courant de charge de manière à réduire la différence de charge entre cellules, et pour exécuter ledit équilibrage pendant la décharge de ladite batterie et/ou l'utilisation d'un système d'alimentation comprenant ladite batterie, et/ou le stockage dudit système d'alimentation.

14. Utilisation d'un premier module électronique (10) en combinaison avec un deuxième module électronique (20) afin d'équilibrer n cellules (40), avec n ≥ 2, constitutives d'une batterie (4) lithium-ion ou lithium-polymère, lesdites cellules (40) étant en série, en créant aux bornes d'au moins une cellule (40) un courant de fuite qui est au moins deux ordres de grandeur inférieur au courant de charge lorsqu'une fin de charge de la batterie (4) a été détectée, de manière à réduire la différence de charge entre cellules utilisant une mémoire, appartenant au premier module électronique (10) et/ou au deuxième module électronique (20) et/ou étant une mémoire externe, mémorisant la tension aux bornes de chaque cellule (40) quand une fin de charge a été détectée, ledit équilibrage étant exécuté pendant la décharge de ladite batterie et/ou l'utilisation d'un système d'alimentation comprenant ladite batterie, et/ou le stockage dudit système d'alimentation.

15. Utilisation selon la revendication précédente, ledit premier module étant le dispositif BQ77PL900 et ledit deuxième module étant le dispositif MSP430.

## Patentansprüche

1. Verfahren des Ausgleichens von n Zellen (40) mit n≥ 2, die eine Lithiumionen- oder Lithiumpolymerbatterie (4) bilden, wobei die Zellen (40) in Serie geschaltet sind, wobei das Verfahren, wenn ein Ende des Ladens der Batterie (4) detektiert wurde, das Realisieren der Generierung eines Strom an den Terminals mindestens einer Zelle (40) zur Reduzierung des Unterschieds der Ladung zwischen den Zellen aufweist,
**dadurch gekennzeichnet, dass**
der Strom ein Kriechstrom ist, der mindestens zwei Größenordnungen kleiner als der Ladestrom ist, und dadurch dass
das Ausgleichverfahren, wenn ein Ende des Ladens detektiert wurde, das Speichern der Spannung an den Terminals jeder Zelle (40) aufweist das Ausgleichverfahren während dem Entladen der Batterie und/oder der Verwendung eines Versorgungssystems mit der besagten Batterie und/oder der Speicherung des Versorgungssystems ausgeführt wird.

2. Verfahren nach Anspruch 1, wobei das Ende des Ladens der Batterie (4) detektiert wird, wenn der Wert des Batterieladestroms kleiner als ein Schwellwert ist.

3. Verfahren nach Anspruch 1 oder 2, wobei das Ende des Ladens der Batterie (4) detektiert wird, wenn der Wert des Batterieladestroms kleiner als 400 mA ist.

4. Verfahren nach einem der Ansprüche 1 bis 3, wobei das Ende des Ladens der Batterie (4) detektiert wird, wenn mindestens eine Zelle (40) an seinen Terminals eine Spannung gleich einer Schwellwertspannung hat.

5. Verfahren nach einem der Ansprüche 1 bis 4, wobei das Ende des Ladens der Batterie (4) detektiert wird, wenn mindestens eine Zelle (40) an seinen Terminals eine Spannung gleich 4 V hat.

6. Verfahren nach einem der Ansprüche 1 bis 5, aufweisend das Messen der Spannung der Terminals jeder Zelle (40), das Bestimmen des Unterschieds des Zustands der Ladung zwischen jeder Zelle (40) und den weniger geladenen Zellen, und die Deduktion des Unterschieds des Zustands der Ladung zwischen jeder Zelle (40) und den weniger geladenen Zellen für jede Messung der Spannung an den Terminals jeder Zelle.

7. Verfahren nach einem der Ansprüche 1 bis 6, wobei der Kriechstrom während einer Ausgleichszeit generiert wird, der/die es erlaubt, den Unterschied zwischen dem Zustand der Ladung bezüglich der weniger geladenen Zellen (40) um zwischen 40 % und 70 % zu reduzieren.

8. Verfahren nach einem der Ansprüche 1 bis 7, wobei der Kriechstrom für jede Zelle (40) gleich ist.

9. Verfahren nach einem der Ansprüche 1 bis 8, wobei der Kriechstrom 2mA ist.

10. Versorgungssystem (1) eines Gleichstrommotors (M), aufweisend
- mindestens eine Lithiumionen- oder Lithiumpolymerbatterie (4), wobei jede Batterie n Zellen (40) aufweist, wobei n∼ 2, wobei die Zellen (40) in Serie geschaltet sind,
- für jede Batterie (4) ein Batteriemanagementsystem (2), wobei das Batteriemanagementsystem (2) aufweist:
- ein erstes elektronisches Modul (10) ausgebildet, die Spannung an den Terminals jeder Zelle (4) zu messen, wenn ein Ende des Ladens der Batterie (4) detektiert wurde,
- ein zweites elektronisches Modul (20) ausgebildet, das Ausgleichen der n Zellen (40) auf der Basis der Spannungen, die von dem ersten elektronischen Modul (10) an den Terminals jeder Zelle (40) gemessen wurden, wenn das Ende des Ladens der Batterie (4) detektiert wurde, und von einem Speicher des ersten elektronischen Moduls (10) und/oder des zweiten elektronischen Moduls (20) und/oder externer Art gespeichert wurde, zu managen, wobei das Ausgleichen durch die Generierung eines Strom, der mindestens zwei Größenordnungen kleiner als der Ladestrom ist, an den Terminals mindestens einer Zelle (40) zur Reduzierung der Unterschiede der Ladung zwischen den Zellen realisiert wird, wobei das Ausgleichen während dem Entladen der Batterie und/oder der Verwendung eines Versorgungssystems mit der besagten Batterie und/oder der Speicherung des Versorgungssystems ausgeführt wird.

11. Das System nach Anspruch 10, wobei das zweite elektronische Modul (20) ausgebildet ist, den Unterschied des Zustands der Ladung zwischen jeder Zelle und den weniger geladenen Zellen zu berechnen und/oder diesen Unterschied für jede Spannungsmessung an den Terminals jeder Zelle (40) zu bestimmen.

12. Das System nach einem der Ansprüche 10 oder 11, aufweisend ein drittes elektronisches Modul ausgebildet zum Generieren eines Kriechstroms, der die Reduzierung des Unterschieds des Zustands der Ladung bezüglich der weniger geladenen Zellen um eine festen Prozentangabe erlaubt, an den Terminals aller Zellen (40), außer den weniger geladenen Zellen.

13. Elektronisches Modul (20) für das Ausgleichsmanagement von n Zellen einer Lithiumionen- oder Lithiumpolymerbatterie (4), wobei jede Batterie n Zellen (40) aufweist, wobei n≥ 2, wobei die Zellen (40) in Serie geschaltet sind,
wobei das elektronische Modul (20) einen Speicher aufweist, wobei, wenn das Ende des Ladens der Batterie (4) detektiert wurde, der Speicher die Spannungen, die an den Terminals jeder Zelle (40) gemessen wurden, speichert, wobei das elektronische Modul (20), wenn das Ende des Ladens der Batterie (4) detektiert wurde, ausgebildet ist, das Ausgleichen der n Zellen (40) zu managen, wobei das Ausgleichen durch die Generierung eines Kriechstroms, der mindestens zwei Größenordnungen kleiner als der Ladestrom ist, an den Terminals mindestens einer Zelle (40) zur Reduzierung der Unterschiede der Ladung zwischen den Zellen realisiert wird, und das Ausgleichen während dem Entladen der Batterie und/oder der Verwendung eines Versorgungssystems mit der besagten Batterie und/oder der Speicherung des Versorgungssystems auszuführen.

14. Verwendung eines ersten elektronischen Moduls (10) in Kombination mit einem zweiten elektronischen Moduls (20) für das Ausgleichen von n Zellen (40), mit n≥ 2, die eine Lithiumionen- oder Lithiumpolymerbatterie (4) bilden, wobei die Zellen (40) in Serie geschaltet sind, durch Generierung eines Kriechstroms, der mindestens zwei Größenordnungen kleiner als der Ladestrom ist, an den Terminals mindestens einer Zelle (40), wenn ein Ende des Ladens der Batterie (4) detektiert wurde, zur Reduzierung des Unterschieds der Ladung zwischen den Zellen,
durch Verwendung eines Speichers des ersten elektronischen Moduls (10) und/oder des zweiten elektronischen Moduls (20) und/oder externer Art, der die Spannung an den Terminals jeder Zelle (40) speichert, wenn ein Ende des Ladens der Batterie (4) detektiert wurde, wobei das Ausgleichen während dem Entladen der Batterie und/oder der Verwendung eines Versorgungssystems mit der besagten Batterie und/oder der Speicherung des Versorgungssystems ausgeführt wird.

15. Verwendung nach dem vorigen Anspruch, wobei das erste Modul das Gerät BQ77PL900 ist und das zweite Modul das Gerät MSP430 ist.

## Claims

1. Method of balancing n cells (40), with n ≥ 2, constituting a lithium-ion or lithium polymer battery (4), said cells (40) being in series, said method consisting in carrying out, if an end of charge of the battery (4) has been detected, the creation at the terminals of at least one cell (40) of a current so as to reduce the difference of charge among cells,
**characterised in that**
said current is a leakage current which is at least two orders of magnitude less than the charge current, and **in that**
said balancing method comprises, when an end of charge has been detected, the memorisation of the voltage at the terminals of each cell (40) said balancing method is executed during the discharge of said battery, and/or the use of a supply system comprising said battery, and/or the storage of said supply system.

2. The method according to claim 1, the end of the charge of the battery (4) being detected if the value of the battery charge current is less than a threshold value.

3. The method according one of the claims 1 or 2, the end of the charge of the battery (4) being detected if the value of the battery charge current is less than 400 mA.

4. The method according one of the claims 1 to 3, the end of the charge of the battery (4) being detected if at least a cell (40) has a voltage at its terminals equal to a threshold voltage.

5. The method according one of the claims 1 to 4, the end of the charge of the battery (4) being detected if at least a cell (40) has a voltage at its terminals equal to 4 V.

6. The method according one of the claims 1 to 5, comprising measuring the voltage at the terminals of each cell (40), determining the difference of the state of charge between each cell (40) and the less charged cell, and deducting the difference of the state of charge between each cell (40) and the less charged cell for each measure of the voltage at the terminals of each cell.

7. The method according one of the claims 1 to 6, said leakage current being created during a balancing time that allows to reduce the difference of the state of the charge with respect to the less charged cell (40) of a percentage comprised between 40% and 70%.

8. The method according one of the claims 1 to 7, said leakage current being the same for each cell (40).

9. The method according one of the claims 1 to 8, said leakage current being of 2 mA.

10. Supply system (1) of a DC motor (M), comprising
- at least one lithium-ion or lithium polymer battery (4), each battery comprising n cells (40), with n ≥ 2, the cells being in series
- for each battery (4), a battery management device (2), the management device (2) comprising
- a first electronic module (10) configured for measuring the voltage at the terminals of each cell (40) when the end of charge of the battery (4) has been detected
- a second electronic module (20) configured for managing the balancing of the n cells (40) on the basis of the voltages at the terminals of each cell (40) measured by the first electronic module (10) when an end of charge has been detected and memorised by a memory belonging to the first electronic module (10) and/or to the second electronic module (20) and/or being an external memory, said balancing being realized by the creation at the terminals of at least one cell (40) of a leakage current which is at least two orders of magnitude less that the charge current so as to reduce the difference of charge among the cells
said balancing being executed during the discharge of said battery and/or the use of said supply system and/or the storage of said supply system.

11. The system according to claim 10, said second electronic module (20) being arranged for calculating the difference of the state of charge between each cell and the less charged cell and/or deducting this difference for each voltage measure at the terminals of each cell (40).

12. The system according to one of claims 10 or 11, comprising a third electronic module configured for creating at the terminals of all cells (40), except the less charged cell, a leakage current during a balancing time that allows to reduce of a fixed percentage said difference of the state of charge with respect to the less charged cell.

13. Electronic module (20) for the balancing managing of n cells of a lithium-ion or lithium polymer battery (4), each battery comprising n cells (40), with n ≥ 2, the cells being in series
said electronic module (20) comprising a memory, said memory memorising, when an end of charge has been detected, the voltage measured at the terminals of each cell, said electronic module (20) being arranged, once the end of the charge of the battery (4) has been detected, for managing the balancing of n cells, said balancing being realised by the creation at the terminals of at least a cell (40) of a leakage current which is at least two orders of magnitude less that the charge current, so as to reduce the difference of charge among the cells, and for executing said balancing during the discharge of said battery and/or the use of a supply system comprising said battery and/or the storage of said supply system.

14. Use of a first electronic module (10) in combination with a second electronic module (20) for balancing n cells (40), with n ≥ 2, constituting a lithium-ion or lithium polymer battery (4), said cells (40) being in series, by creating at the terminals of at least one cell (40) of a leakage current which is which is at least two orders of magnitude less that the charge current, once an end of charge of the battery (4) has been detected, so as to reduce the difference of charge among the cells,
by using a memory belonging to the first electronic module (10) and/or to the second electronic module (20) and/or being an external memory, memorising the voltage at the terminals of each cell (40) when an end of charge has been detected, said balancing being executed during the discharge of said battery and/or the use of a supply system comprising said battery and/or the storage of said supply system.

15. Use according to the previous claim, said first module being the device BQ77PL900 and said second module being the device MSP430.
